# EUROPÄISCHE PATENTSCHRIFT

(11) **EP 3 332 394 B1**
(45) Veröffentlichungstag und Bekanntmachung des Hinweises auf die Patenterteilung: **20.03.2019**
(21) Anmeldenummer: 16756600.9
(22) Anmeldetag: 01.08.2016
(51) Int. Cl.: G08B 17/103, G01S 17/48

(54) **FLÄCHENBEARBEITUNGSGERÄT UND BASISSTATION**
SURFACE TREATMENT DEVICE AND BASE STATION
APPAREIL DE TRAITEMENT DE SURFACE ET STATION DE BASE

(30) Priorität: 07.08.2015 DE 102015113035
(43) Veröffentlichungstag der Anmeldung: 13.06.2018
(73) Patentinhaber: Vorwerk & Co. Interholding GmbH, 42275 Wuppertal (DE)
(72) Erfinder: MEYER, Frank, 58640 Iserlohn (DE)
(74) Vertreter: Müller, Enno
(86) Internationale Anmeldenummer: PCT/EP2016/068300
(87) Internationale Veröffentlichungsnummer: WO 2017/025370

(56) Entgegenhaltungen:
- EP-A1- 2 423 893
- US-A1- 2006 061 478
- US-B1- 6 225 910

## Beschreibung

### Gebiet der Technik

Die Erfindung betrifft zunächst eine Basisstation nach den Merkmalen des Oberbegriffes des Anspruches 1.

Weiter betrifft die Erfindung ein System aus einem Flächenbearbeitungsgerät, insbesondere einem Reinigungsroboter, und einer Basisstation nach den Merkmalen des Oberbegriffes des Anspruches 5.

Weiter betrifft die Erfindung ein Verfahren zum Betrieb einer Basisstation.

### Stand der Technik

Basisstationen zur Verbindung mit einem Flächenbearbeitungsgerät sind im Stand der Technik hinreichend bekannt. Das Flächenbearbeitungsgerät ist mit der Basisstation verbindbar, um beispielsweise eine Staubkammer des Flächenbearbeitungsgerätes auszuleeren, zu reinigen, einen Akkumulator des Flächenbearbeitungsgerätes aufzuladen oder ähnliches. Sofern das Flächenbearbeitungsgerät beispielsweise ein Reinigungsroboter, insbesondere ein Wisch- und/oder Saugroboter, ist, kann dieser die Basisstation nach Bedarf selbständig anfahren. In anderen Fällen kann ein Nutzer das Flächenbearbeitungsgerät manuell mit der Basisstation verbinden, um die vorgenannten Servicehandlungen durchzuführen.

Das Flächenbearbeitungsgerät und die Basisstation weisen beispielsweise korrespondierende optische Elemente auf, welche im einfachsten Fall dazu ausgebildet sind, die Anwesenheit des Flächenbearbeitungsgerätes an der Basisstation zu detektieren oder einen Abstand des Flächenbearbeitungsgerätes relativ zu der Basisstation zu messen. Beispielsweise kann eines der optischen Elemente auch Teil eines Lasertriangulationssystems des Flächenbearbeitungsgerätes sein.

Die Druckschrift DE 10 2008 014 912 A1 offenbart beispielsweise ein Flächenbearbeitungsgerät mit einem solchen optischen Triangulationssystem, welches zur Hinderniserkennung mehrere optische Elemente bereitstellt. Die optischen Elemente beinhalten unter anderem eine Lichtquelle und einen Sensor für die von einem gemessenen Objekt reflektierten Lichtstrahlen.

Aus der EP 2 423 893 A1 ist eine Basisstation mit einem optischen Basiselement bekannt. Das optische Basiselement ist ein Infrarotempfänger. Hierdurch ist die bekannte Basisstation dazu ausgebildet, Informationen von dem Flächenbearbeitungsgerät zu erhalten.

### Zusammenfassung der Erfindung

Ausgehend von dem dargelegten Stand der Technik beschäftigt sich die Erfindung mit der Aufgabenstellung, eine Basisstation und/oder ein System aus einem Flächenbearbeitungsgerät und einer Basisstation oder ein Verfahren zum Betrieb einer Basisstation anzugeben, welche bzw. das einem Nutzer einen Mehrwert durch weitere Funktionalitäten bietet.

Diese Aufgabe ist zunächst beim Gegenstand des Anspruches 1 gelöst, wobei darauf abgestellt ist, dass das optische Basiselement zur Zusammenwirkung mit einem externen Element derart ausgebildet ist, dass von dem optischen Basiselement emittiertes Licht mittels des externen Elementes zumindest teilweise zu dem optischen Basiselement reflektiert wird, wobei die Auswerteeinrichtung ausgebildet ist, während einer Zusammenwirkung des optischen Basiselementes und des externen Elementes zum Zwecke der Detektion einer Anwesenheit von Rauch zwischen dem optischen Basiselement und dem externen Element ein von dem optischen Basiselement empfangenes Messsignal in Bezug auf eine zeitliche Änderung der Signalamplitude auszuwerten und bei Passieren eines definierten Grenzwertes ein Alarmsignal zu veranlassen.

Ein Flächenbearbeitungsgerät kann als optisches Geräteelement zur Zusammenwirkung mit einem externen Element derart ausgebildet sein, dass das von dem optischen Geräteelement emittierte Licht mittels des externen Elementes zumindest usw. zumindest teilweise zu dem optischen Basiselement reflektiert wird, wobei die Auswerteeinrichtung ausgebildet ist, während einer Zusammenwirkung des optischen Basiselementes und des externen Elementes zum Zwecke der Detektion einer Anwesenheit von Rauch zwischen dem optischen Basiselement und dem externen Element ein von dem optischen Basiselement empfangenes Messsignal in Bezug auf eine zeitliche Änderung der Signalamplitude auszuwerten und bei Passieren eines definierten Grenzwertes ein Alarmsignal zu veranlassen.

Diese Aufgabe ist weiter beim Gegenstand des Anspruches 5 hinsichtlich eines Systems aus einem Flächenbearbeitungsgerät und einer Basisstation gelöst, wobei darauf abgestellt ist, dass zumindest einem optischen Element eine Auswerteeinrichtung zugeordnet ist, welche ausbildet ist, während einer Zusammenwirkung der optischen Elemente zum Zwecke der Detektion einer Anwesenheit von Rauch zwischen dem optischen Geräteelement und dem optischen Basiselement ein von einem der optischen Elemente empfangenes Messsignal in Bezug auf eine zeitliche Änderung der Signalamplitude auszuwerten und bei Passieren eines definierten Grenzwertes ein Alarmsignal zu veranlassen und dass die Zusammenwirkung der optischen Elemente bei einem Kontakt zwischen dem Flächenbearbeitungsgerät und der Basisstation stattfindet, wobei gleichzeitig zu der Funktion als Rauchsensor auch Servicehandlungen der Basisstation durchgeführt werden können, wie beispielsweise die Ladung eines Akkumulators oder die Reinigung einer Staubkammer des Flächenbearbeitungsgerätes.

Diese Aufgabe ist darüber hinaus bei einem Verfahren zum Betrieb einer Basisstation, wie sie insbesondere in Anspruch 1 beschrieben ist, gelöst, bei welchem darauf abgestellt ist, dass das Basiselement für eine Zusammenwirkung mit dem Abstand beabstandet wird, wobei das optische Basiselement Licht emittiert, welches von dem optischen Basiselement empfangen wird, wobei eine Auswerteeinrichtung der Basisstation das mittels des optischen Basiselementes empfangene Messsignal zum Zwecke der Detektion einer Anwesenheit von Rauch zwischen dem optischen Basiselement und dem externen Element in Bezug auf eine zeitliche Änderung der Signalamplitude auswertet und bei einem Passieren eines definierten Grenzwertes ein Alarmsignal veranlasst.

Auch die optischen Geräteelemente des Flächenbearbeitungsgerätes und das externe Element können somit einen Rauchsensor ausbilden, wobei das von einem der optischen Geräteelemente empfangene Messsignal über eine definierte Zeitspanne, insbesondere kontinuierlich, von der Auswerteeinrichtung ausgewertet wird, wobei die Auswerteeinrichtung eine Veränderung der Signalamplitude erkennt und im Falle einer übermäßigen Veränderung, welche durch einen Grenzwert festgelegt ist, eine Anwesenheit von Rauch zwischen den optischen Geräteelementen des Flächenbearbeitungsgerätes und dem externen Element feststellt und daraufhin eine Alarmanlage veranlasst, ein

Alarmsignal (Feueralarm) auszugeben. Die optischen Geräteelemente können unter anderem insbesondere zumindest eine Lichtquelle und einen Sensor aufweisen. Diese können beispielsweise auch zu einer gemeinsamen Sende-Empfangs-Einheit verbunden sein. Das externe Element ist bevorzugt ein Spiegel, im einfachsten Fall eine das emittierte Licht zumindest teilweise reflektierende Oberfläche, beispielsweise ein Oberflächenteilbereich einer Wand oder eines Möbelstückes. Das externe Element ist bevorzugt ein optische Basiselement der Basisstation, beispielsweise eine teilweise reflektierende Oberfläche des Gehäuses der Basisstation oder auch ein innerhalb des Gehäuses angeordneter optischer Spiegel. Das von dem optischen Geräteelement emittierte Licht wird dabei mittels des externen Elementes, d. h. der reflektierenden Oberfläche oder dem optischen Spiegel, zu einem weiteren optischen Geräteelement des Flächenbearbeitungsgerätes reflektiert. Bei Abwesenheit von Rauch empfängt das optische Geräteelement die Lichtstrahlung der Lichtquelle bevorzugt nahezu vollständig, bei Anwesenheit von Rauch hingegen ein Messsignal mit demgegenüber verringerter Signalamplitude. Dabei wird stets eine aktuell gemessene Signalamplitude mit einer für die Abwesenheit von Rauch üblichen Referenzsignalamplitude verglichen, wobei bei Unterschreiten eines definierten Grenzwertes auf die Anwesenheit von Rauch geschlossen wird. Die Auswerteeinrichtung kann sodann aufgrund des Detektionsergebnisses ein Signal an eine Alarmeinheit des Flächenbearbeitungsgerätes, einer Basisstation oder auch einer Hausalarmanlage übermitteln, woraufhin diese ein optisches und/oder akustisches Alarmsignal an den Nutzer des Flächenbearbeitungsgerätes, eine Notrufstelle oder ähnliches übermittelt.

Es wird vorgeschlagen, dass das optische Geräteelement eine Lichtquelle ist, bevorzugt eine Diode, besonders bevorzugt eine Laserdiode. Die Verwendung einer Diode bzw. Laserdiode als Lichtquelle bietet sich an, da diese leicht in eine elektrische Schaltung integriert werden kann, besonders klein und kostengünstig ist. Die Laserdiode bietet zudem den Vorteil der räumlich kohärenten Lichtemission, so dass das emittierte Licht auch über größere Entfernungen gebündelt ist und ohne Aufweitung propagiert, was ansonsten zu einer Änderung der von dem Sensor gemessenen Signalamplitude und damit zu einer Missinterpretation des Messsignals führen könnte.

Es wird vorgeschlagen, dass die Lichtquelle ein Element einer Abstandsmesseinrichtung, insbesondere einer Triangulationsmesseinrichtung, des Flächenbearbeitungsgerätes ist. Die für die Detektion von Rauch benötigte Lichtstrahlung kann somit von einer Lichtquelle des Flächenbearbeitungsgerätes emittiert werden, welche im Übrigen auch zur Abstandsmessung und/oder Hinderniserkennung eingesetzt wird. Somit ist es nicht erforderlich, eine separate Lichtquelle zur Ausbildung des Rauchsensors an dem Flächenbearbeitungsgerät anzuordnen. Vielmehr kann die Lichtquelle des Flächenbearbeitungsgerätes, welche beispielsweise während eines Ruhezustandes des Flächenbearbeitungsgerätes nicht zur Abstandsmessung bzw. Hindernisdetektion benötigt wird, zur Rauchdetektion eingesetzt werden. Alternativ kann auch eine getaktete, zeitlich abwechselnde Verwendung der Lichtquelle zur Rauchmessung und Abstandsmessung/Hinderniserkennung vorgesehen sein.

Es wird zudem vorgeschlagen, dass das optische Geräteelement ein Sensor, insbesondere eine Fotodiode oder ein Kamerachip, ist. Als Sensor eignet sich insbesondere ein kostengünstiges Massenbauteil wie beispielsweise eine Fotodiode oder ein Kamerachip. Dieses kann besonders vorteilhaft in eine elektronische Leiterstruktur des Flächenbearbeitungsgerätes integriert werden.

Neben dem zuvor vorgeschlagenen Flächenbearbeitungsgerät schlägt die Erfindung ebenso eine Basisstation der vorgenannten Art vor, deren optisches Basiselement zur Zusammenwirkung mit einem externen Element derart ausgebildet ist, dass von dem optischen Basiselement emittiertes Licht mittels des externen Elementes zumindest teilweise zu einem optischen Basiselement reflektiert wird, wobei die Auswerteeinrichtung ausgebildet ist, während einer Zusammenwirkung des optischen Basiselementes und des externen Elementes zum Zwecke der Detektion einer Anwesenheit von Rauch zwischen dem optischen Basiselement und dem externen Element ein von dem optischen Basiselement empfangenes Messsignal in Bezug auf eine zeitliche Änderung der Signalamplitude auszuwerten und bei Passieren eines definierten Grenzwertes ein Alarmsignal zu veranlassen.

Die optischen Basiselemente der Basisstation und das externe Element bilden zusammen einen Rauchsensor aus, wobei das von einem der optischen Basiselemente empfangene Messsignal über eine definierte Zeitspanne, insbesondere kontinuierlich, von der Auswerteeinrichtung ausgewertet wird, wobei die Auswerteeinrichtung eine Veränderung der Signalamplitude erkennt und im Falle einer übermäßigen Veränderung, welche durch einen Grenzwert festgelegt ist, eine Anwesenheit von Rauch zwischen den optischen Basiselementen der Basisstation und dem externen Element feststellt und daraufhin eine Alarmanlage veranlasst, ein Alarmsignal (Feueralarm) auszugeben. Die optischen Basiselemente sind zumindest eine Lichtquelle und ein Sensor. Diese können zu einer gemeinsamen Sende-Empfangs-Einheit verbunden sein. Das externe Element ist bevorzugt ein Spiegel, im einfachsten Fall eine das emittierte Licht zumindest teilweise reflektierende Oberfläche, beispielsweise ein Oberflächenteilbereich einer Wand oder eines Möbelstückes. Bevorzugt kann das externe Element jedoch auch ein optisches Geräteelement eines Flächenbearbeitungsgerätes sein, beispielsweise eine teilweise reflektierende Oberfläche des Gehäuses des Flächenbearbeitungsgerätes oder auch ein innerhalb des Gehäuses angeordneter optischer Spiegel. Das von dem optischen Basiselement emittierte Licht wird dabei mittels des externen Elementes, d. h. der reflektierenden Oberfläche oder dem optischen Spiegel, zu dem weiteren optischen Basiselement reflektiert. Bei Abwesenheit von Rauch empfängt das optische Basiselement die Lichtstrahlung der Lichtquelle bevorzugt nahezu vollständig, bei Anwesenheit von Rauch hingegen ein Messsignal mit demgegenüber verringerter Signalamplitude. Dabei wird stets eine aktuell gemessene Signalamplitude mit einer für die Abwesenheit von Rauch üblichen Referenzsignalamplitude verglichen, wobei bei Unterschreiten eines definierten Grenzwertes auf die Anwesenheit von Rauch geschlossen wird. Die Auswerteeinrichtung kann sodann aufgrund des Detektionsergebnisses ein Signal an eine Alarmeinheit der Basisstation, des Flächenbearbeitungsgerätes oder auch einer Hausalarmanlage übermitteln, woraufhin diese ein optisches und/oder akustisches Alarmsignal an den Nutzer der Basisstation, eine Notrufstelle oder ähnliches übermittelt.

Es wird vorgeschlagen, dass das optische Basiselement, eine Lichtquelle, eine Diode, bevorzugt eine Laserdiode, ist. Die Verwendung einer Diode bzw. Laserdiode als Lichtquelle bietet sich an, da diese leicht in eine elektrische Schaltung integriert werden kann, besonders klein und kostengünstig ist. Die Laserdiode bietet zudem den Vorteil der räumlich kohärenten Lichtemission, so dass das emittierte Licht auch über größere Entfernungen gebündelt ist und ohne Aufweitung propagiert, was ansonsten zu einer Änderung der von dem Sensor gemessenen Signalamplitude und damit zu einer Missinterpretation des Messsignals führen könnte.

Darüber hinaus wird vorgeschlagen, dass das optische Basiselement ein Sensor, insbesondere eine Fotodiode oder ein Kamerachip, ist. Als Sensor eignet sich insbesondere ein kostengünstiges Massenbauteil wie beispielsweise eine Fotodiode oder ein Kamerachip. Dieses kann zudem besonders vorteilhaft in eine elektronische Leiterstruktur der Basisstation integriert werden.

Hinsichtlich des Systems aus einem Flächenbearbeitungsgerät und einer Basisstation bilden die optischen Elemente des Flächenbearbeitungsgerätes und der Basisstation einen Rauchsensor aus, wobei das von einem der optischen Elemente empfangene Messsignal über eine definierte Zeitspanne, insbesondere kontinuierlich, von der Auswerteeinrichtung ausgewertet wird, wobei die Auswerteeinrichtung eine Veränderung der Signalamplitude erkennt und im Falle einer übermäßigen Veränderung, welche durch einen Grenzwert festgelegt ist, eine Anwesenheit von Rauch zwischen dem optischen Geräteelement des Flächenbearbeitungsgerätes und dem optischen Basiselement der Basisstation feststellt und daraufhin eine Alarmanlage veranlasst, ein Alarmsignal (Feueralarm) auszugeben. Die optischen Elemente können unter anderem insbesondere zumindest eine Lichtquelle, einen Spiegel und/oder einen Sensor aufweisen.

Grundsätzlich kommen zur Detektion einer Anwesenheit von Rauch unterschiedliche optische Anordnungen in Frage. Gemäß einer ersten Anordnung kann ein das Messsignal empfangender Sensor beispielsweise in dem optischen Strahlengang der Lichtquelle (d. h. in Hauptpropagationsrichtung des Lichtes) angeordnet sein, so dass der Sensor bei Abwesenheit von Rauch die Lichtstrahlung der Lichtquelle direkt und bevorzugt vollständig empfängt und bei Anwesenheit von Rauch ein Messsignal mit demgegenüber verringerter Signalamplitude empfängt. Gemäß einer zweiten Anordnung kann der Sensor außerhalb des optischen Strahlweges der von der Lichtquelle emittierten Strahlung angeordnet sein, um Streulicht außerhalb des optischen Strahlweges zu messen. Im Falle der Abwesenheit von Rauch (oder anderen Objekten) ist die Signalamplitude üblicherweise Null, während bei einer Anwesenheit von Rauch die von der Lichtquelle emittierte Strahlung an dem Rauch (bzw. an den Rauchpartikeln) gestreut wird und auf den oder die optischen Sensoren treffen kann. Dabei wird sowohl bei der ersten als auch der zweiten Anordnung stets eine aktuell gemessene Signalamplitude mit einer für die Abwesenheit von Rauch üblichen Referenzsignalamplitude verglichen, wobei bei Unterschreiten (erste Anordnung) bzw. Überschreiten (zweite Anordnung) eines definierten Grenzwertes auf die Anwesenheit von Rauch geschlossen wird. Die Auswerteeinrichtung kann sodann ein Signal an eine Alarmeinheit des Flächenbearbeitungsgerätes, der Basisstation oder auch einer Hausalarmanlage übermitteln, woraufhin diese ein optisches oder akustisches Alarmsignal an den Nutzer des Flächenbearbeitungsgerätes, eine Notrufstelle oder ähnliches übermittelt.

Es wird vorgeschlagen, dass die optischen Elemente so an dem Flächenbearbeitungsgerät und der Basisstation angeordnet sind, dass ein Abstand zwischen dem optischen Geräteelement und dem optischen Basiselement während einer Zusammenwirkung ungefähr 1 cm bis 20 cm beträgt. Dieser Abstand ist so bemessen, dass zum einen ein genügend großer Abstand zwischen dem optischen Element des Flächenbearbeitungsgerätes und dem optischen Element der Basisstation verbleibt, in welchen bei einem Brand entstehender Rauch eindringen kann. Zum anderen ist der Abstand damit in einer Größenordnung, welche eine möglichst verlustfreie Übertragung der von einer Lichtquelle emittierten Strahlung an ein anderes optisches Element, z. B. einen Sensor, sicherstellt. Um einen solchen Abstand zwischen den optischen Elementen des Flächenbearbeitungsgerätes und der Basisstation auch während eines Kontaktes von Flächenbearbeitungsgerät und Basisstation zu ermöglichen, sind die optischen Elemente entsprechend an dem Flächenbearbeitungsgerät bzw. der Basisstation angeordnet. Eine Zusammenwirkung der optischen Elemente findet bei einem Kontakt zwischen dem Flächenbearbeitungsgerät und der Basisstation statt. Das Flächenbearbeitungsgerät befindet sich unter Ausbildung des vorteilhaften Abstandes in Kontakt mit der Basisstation, so dass gleichzeitig zu der Funktion als Rauchsensor auch Servicehandlungen durchgeführt werden können, wie beispielsweise die Ladung eines Akkumulators oder die Reinigung einer Staubkammer des Flächenbearbeitungsgerätes.

Es wird vorgeschlagen, dass das optische Geräteelement oder das optische Basiselement eine Lichtquelle ist, bevorzugt eine Diode, besonders bevorzugt eine Laserdiode. Die Verwendung einer Diode bzw. Laserdiode als Lichtquelle bietet sich an, da diese leicht in eine elektrische Schaltung integriert werden kann, besonders klein und kostengünstig ist. Die Laserdiode bietet zudem den Vorteil der räumlich kohärenten Lichtemission, so dass das emittierte Licht auch über größere Entfernungen gebündelt ist und ohne Aufweitung propagiert, was ansonsten zu einer Änderung der von dem Sensor gemessenen Signalamplitude und damit zu einer Missinterpretation des Messsignals führen könnte.

Vorteilhaft ist die Lichtquelle ein Element einer Abstandsmesseinrichtung, insbesondere einer Triangulationsmesseinrichtung, des Flächenbearbeitungsgerätes. Die für Flächenbearbeitungsgeräte verwendeten Abstandsmesseinrichtungen, insbesondere Triangulationsmesseinrichtungen, verwenden üblicherweise bereits Laserdioden, so dass die vorgenannten Vorteile erreicht werden können. Die für die Detektion einer Anwesenheit von Rauch benötigte Lichtstrahlung kann grundsätzlich entweder von einem optischen Element des Flächenbearbeitungsgerätes oder von einem optischen Element der Basisstation bereitgestellt werden. Besonders vorteilhaft wird jedoch eine Lichtquelle des Flächenbearbeitungsgerätes verwendet, welche im Übrigen auch zur Abstandsmessung und/ oder Hinderniserkennung eingesetzt werden kann. Somit ist es nicht erforderlich, eine separate Lichtquelle zur Ausbildung der Rauchsensoranordnung an dem Flächenbearbeitungsgerät bzw. der Basisstation vorzusehen. Vielmehr kann die Lichtquelle des Flächenbearbeitungsgerätes, welche zeitweise, beispielsweise während der Anwesenheit des Flächenbearbeitungsgerätes in bzw. an der Basisstation, nicht zur Abstandsmessung bzw. Hinderniserkennung benötigt wird, zur Rauchdetektion eingesetzt werden.

Alternativ kann die Lichtquelle jedoch auch ein optisches Element der Basisstation, d. h. ein optisches Basiselement, sein, welches mit einem optischen Element des Flächenbearbeitungsgerätes korrespondiert. Die Lichtstrahlung geht in diesem Fall nicht von dem Flächenbearbeitungsgerät aus, sondern vielmehr von der Basisstation. Dies kann insbesondere vorteilhaft sein, weil die Basisstation üblicherweise ein stationäres Gerät ist, welches an eine elektrische Versorgung eines Gebäudes angeschlossen ist und nicht über einen Akkumulator betrieben werden muss.

Es wird vorgeschlagen, dass das optische Basiselement oder das optische Geräteelement ein Sensor, insbesondere eine Fotodiode oder ein Kamerachip, ist. Erfindungsgemäß kann somit entweder die Basisstation oder das Flächenbearbeitungsgerät den Sensor zur Detektion der Signalamplitude aufweisen. Beispielsweise kann vorgesehen sein, dass das Flächenbearbeitungsgerät eine Lichtquelle aufweist und die Basisstation einen Sensor, oder umgekehrt, dass das Flächenbearbeitungsgerät den Sensor aufweist und die Basisstation die dazu korrespondierende Lichtquelle. Als Sensor eignet sich insbesondere ein kostengünstiges Massenbauteil wie beispielsweise eine Fotodiode oder ein Kamerachip. Diese können zudem besonders vorteilhaft in eine elektronische Leiterstruktur des Flächenbearbeitungsgerätes bzw. der Basisstation integriert werden.

Es wird des Weiteren vorgeschlagen, dass das optische Basiselement oder das optische Geräteelement ein Spiegel zur zumindest teilweisen Reflexion des von dem optischen Geräteelement oder dem optischen Basiselement emittierten Lichtes ist. In diesem Fall weist entweder das Flächenbearbeitungsgerät oder alternativ die Basisstation sowohl die Lichtquelle als auch den Sensor auf. Die von der Lichtquelle emittierte Lichtstrahlung wird dabei lediglich an dem Spiegel der Basisstation bzw. des Flächenbearbeitungsgerätes reflektiert, so dass das optische Element in diesem Fall vollständig passiv ausgebildet sein kann und keine Stromversorgung benötigt. Beispielsweise ist dies dort vorteilhaft, wo ein Akkumulator nicht zusätzlich durch aktive optische Komponenten (Lichtquelle, Sensor) belastet werden soll. Der Spiegel zur Reflexion der Strahlung kann ein separates optisches Element des Flächenbearbeitungsgerätes bzw. der Basisstation sein. Alternativ kann jedoch auch eine Oberfläche der Basisstation bzw. des Flächenbearbeitungsgerätes eine spiegelnde Oberfläche aufweisen, insbesondere mit einer Reflexionsschicht beschichtet sein. Es versteht sich dabei von selbst, dass der Reflexionsgrad der Spiegelfläche zu der Wellenlänge der emittierten Strahlung korrespondiert.

Des Weiteren wird mit der Erfindung ebenso ein Verfahren zum Betrieb eines Flächenbearbeitungsgerätes und/oder einer Basisstation vorgeschlagen, wobei mindestens ein optisches Geräteelement des Flächenbearbeitungsgerätes und/oder mindestens ein optisches Basiselement der Basisstation miteinander und/oder mit einem externen Element zusammenwirken, wobei die optischen Elemente für eine Zusammenwirkung mit einem Abstand zueinander beabstandet werden, wobei das optische Geräteelement oder das optische Basiselement Licht emittiert, welches von dem optischen Basiselement oder dem optischen Geräteelement empfangen wird oder von dem optischen Basiselement oder dem optischen Geräteelement oder dem externen Element zu dem optischen Geräteelement oder dem optischen Basiselement reflektiert wird, wobei eine Auswerteeinrichtung des Flächenbearbeitungsgerätes oder der Basisstation das mittels des optischen Geräteelementes oder des optischen Basiselementes empfangene Messsignal zum Zwecke der Detektion einer Anwesenheit von Rauch zwischen dem optischen Geräteelement und dem optischen Basiselement oder zwischen dem externen Element und dem optischen Geräteelement oder dem optischen Basiselement in Bezug auf eine zeitliche Änderung der Signalamplitude auswertet und bei einem Passieren eines definierten Grenzwertes ein Alarmsignal veranlasst.

Somit ist das erfindungsgemäße Verfahren (wie auch das vorgenannte System) auf im Wesentlichen zwei Funktionsweisen einstellbar. Gemäß einer ersten Funktionsweise emittiert ein optisches Element des Flächenbearbeitungsgerätes Licht, welches von einem optischen Element der Basisstation detektiert wird, oder umgekehrt. Gemäß einer zweiten Funktionsweise übernehmen zwei optische Elemente, welche beide entweder an dem Flächenbearbeitungsgerät oder an der Basisstation angeordnet sind, sowohl das Emittieren als auch das Detektieren eines Lichtsignals, während ein korrespondierendes optisches Element der Basisstation/ des Flächenbearbeitungsgerätes bzw. ein anderes externes Element lediglich als Spiegel funktioniert, der das von dem optischen Element des Flächenbearbeitungsgerätes bzw. der Basisstation emittierte Licht an ein optisches Element des Flächenbearbeitungsgerätes bzw. der Basisstation zurückreflektiert. Der Sensor ist dabei vorteilhaft in der Nähe der Lichtquelle angeordnet, so dass die gegenläufigen Lichtsignale räumlich nah beieinander liegen.

### Kurze Beschreibung der Zeichnungen

Im Folgenden wird die Erfindung anhand von Ausführungsbeispielen näher erläutert. Es zeigen:
- Fig. 1: ein System aus einem Flächenbearbeitungsgerät und einer Basisstation in einer Raumsituation,
- Fig. 2: die Raumsituation gemäß Figur 1 mit einer Rauchentwicklung durch Feuer,
- Fig. 3: eine Draufsicht auf das erfindungsgemäße System,
- Fig. 4: eine schematische Darstellung eines Systems gemäß einer ersten Ausführungsform ohne Anwesenheit von Rauch,
- Fig. 5: das System gemäß Figur 4 bei Anwesenheit von Rauch,
- Fig. 6: ein System gemäß einer zweiten Ausführungsform ohne Anwesenheit von Rauch,
- Fig. 7: das System gemäß Figur 6 bei Anwesenheit von Rauch,
- Fig. 8: ein System gemäß einer dritten Ausführungsform ohne Anwesenheit von Rauch,
- Fig. 9: das System gemäß Figur 8 bei Anwesenheit von Rauch,
- Fig. 10: ein System gemäß einer vierten Ausführungsform ohne Anwesenheit von Rauch,
- Fig. 11: das System gemäß Figur 10 bei Anwesenheit von Rauch.

### Beschreibung der Ausführungsformen

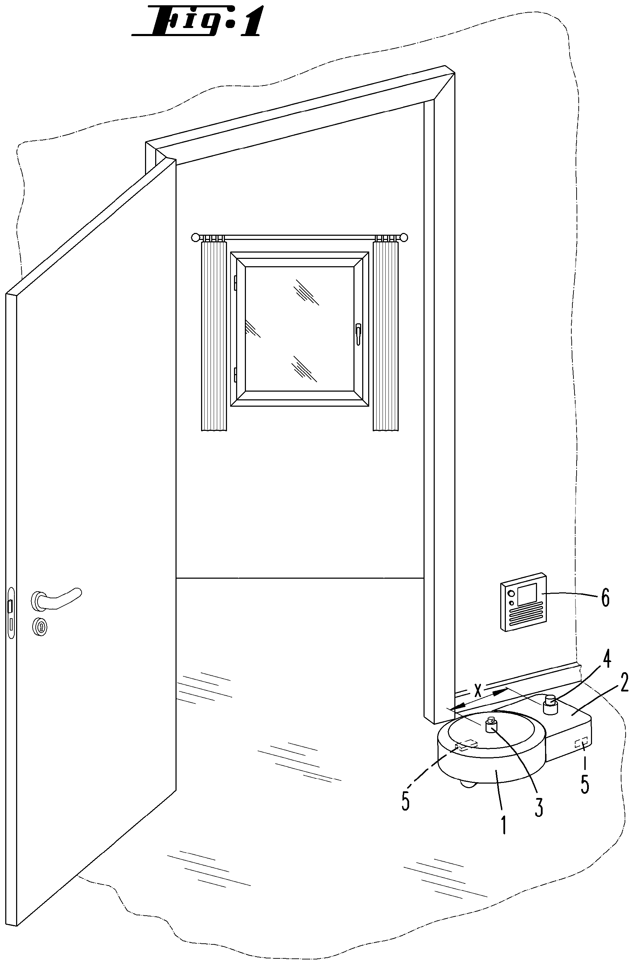

Figur 1 zeigt ein System aus einem Flächenbearbeitungsgerät 1 und einer Basisstation 2, welches sich in einer üblichen Raumsituation befindet. Das Flächenbearbeitungsgerät 1 ist hier lediglich beispielhaft als selbsttätig verfahrbarer Reinigungsroboter ausgebildet. Die Basisstation 2 ist nicht selbsttätig verfahrbar, jedoch von einem Nutzer des Systems frei innerhalb des Raums platzierbar.

Das Flächenbearbeitungsgerät 1 verfügt über ein optisches Geräteelement 3, welches an der Oberseite des Flächenbearbeitungsgerätes 1 angeordnet ist, und eine Auswerteeinrichtung 5, welche einen Mikroprozessor sowie einen Datenspeicher beinhaltet. Die Basisstation 2 weist ein optisches Basiselement 4 und eine Auswerteeinrichtung 5 auf, sowie gegebenenfalls weitere nicht dargestellte Bauteile, welche beispielsweise der Ladung eines Akkumulators des Flächenbearbeitungsgerätes 1, einer Reinigung einer Staubkammer des Flächenbearbeitungsgerätes 1 oder ähnlichem dienen.

In der gezeigten Darstellung ist das Flächenbearbeitungsgerät 1 in unmittelbarem Kontakt zu der Basisstation 2 angeordnet, d. h. mit der Basisstation 2 verbunden. Das Flächenbearbeitungsgerät 1 und die Basisstation 2 verfügen über formkorrespondierende Gehäuseteilbereiche, so dass das Flächenbearbeitungsgerät 1 in einen Teilbereich der Basisstation 2 einfahren kann. In dieser Stellung weisen die optischen Elemente 3, 4 einen Abstand x zueinander auf. Während der Anordnung des Flächenbearbeitungsgerätes 1 an der Basisstation 2 nimmt das Flächenbearbeitungsgerät 1 keine Flächenbearbeitungsaufgaben wahr. Vielmehr werden gegebenenfalls Servicehandlungen mittels der Basisstation 2 an dem Flächenbearbeitungsgerät 1 durchgeführt.

Wie im Folgenden erläutert, wirken das Flächenbearbeitungsgerät 1 und die Basisstation 2 in dieser Stellung auch als ein Rauchsensor zusammen (wobei jedoch nicht ausgeschlossen ist, dass das System auch in einem getrennten Zustand von Flächenbearbeitungsgerät 1 und Basisstation 2 als Rauchsensor funktionieren kann).

In der Funktion als Rauchsensor wird zum Zwecke der Detektion einer Anwesenheit von Rauch zwischen dem optischen Geräteelement 3 und dem optischen Basiselement 4 ein von einem der optischen Elemente 3, 4 emittiertes Lichtsignal von einem anderen optischen Element 3, 4 empfangen und von einer Auswerteeinrichtung 5 des Flächenbearbeitungsgerätes 1 und/oder der Basisstation 2 in Bezug auf eine zeitliche Änderung der Signalamplitude (oder der Lichtintensität) ausgewertet. Bei einem Über- bzw. Unterschreiten eines definierten Grenzwertes wird ein Alarmsignal veranlasst, welches Hinweis auf die Anwesenheit von Rauch, d. h. insbesondere das Auftreten eines Wohnungsbrandes, ist. Das optische Bauelement 3, 4, welches als Sensor dient, empfängt kontinuierlich ein Messsignal und vergleicht dieses kontinuierlich mit einem in einem Datenspeicher hinterlegten Grenzwert, so dass die Anwesenheit von Rauch ohne wesentliche Zeitverzögerung festgestellt werden kann. In einem der Räume ist hier zudem noch eine Alarmanlage 6 angeordnet, die zur Kommunikation mit der Auswerteeinrichtung 5 des Flächenbearbeitungsgerätes 1 oder der Basisstation 2 ausgebildet ist und das Alarmsignal an eine externe Notrufstelle, ein mobiles Gerät des Nutzers oder ähnliches weiterleiten kann.

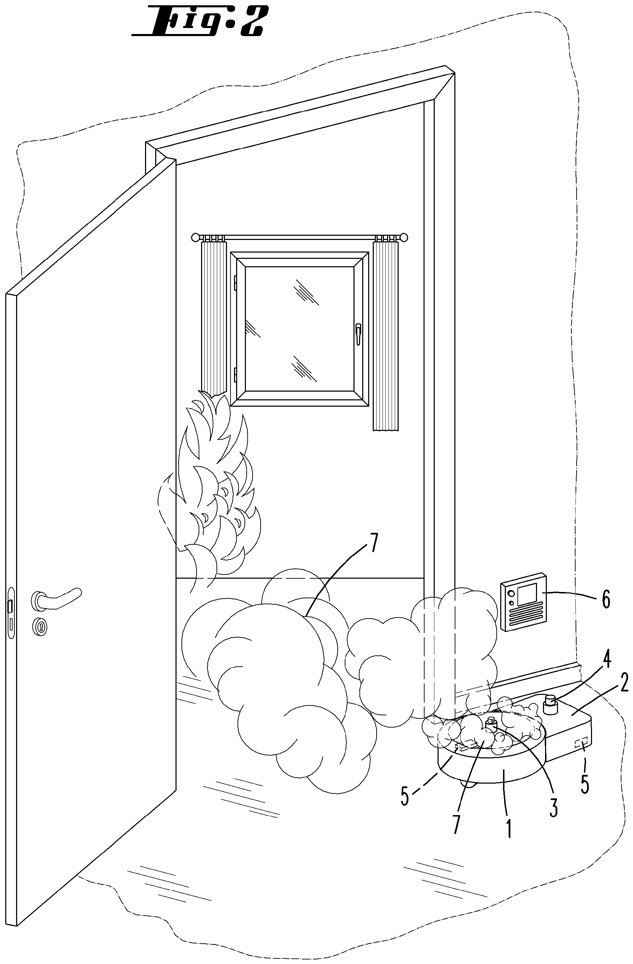

Figur 2 zeigt die zuvor beschriebene Raumsituation bei Ausbruch eines Feuers innerhalb eines Raumes. Dabei kommt es zu einer Entwicklung von Rauch 7, d. h. zu einer Anwesenheit von Rauch innerhalb der Räume. Der Rauch 7 erreicht auch den Ort, an welchem das erfindungsgemäße System aus Flächenbearbeitungsgerät 1 und Basisstation 2 angeordnet ist. Der Rauch 7 dringt zumindest teilweise zwischen das optische Geräteelement 3 des Flächenbearbeitungsgerätes 1 und das optische Basiselement 4 der Basisstation 2, welche hier mit einem Abstand x von ca. 20 cm beabstandet sind.

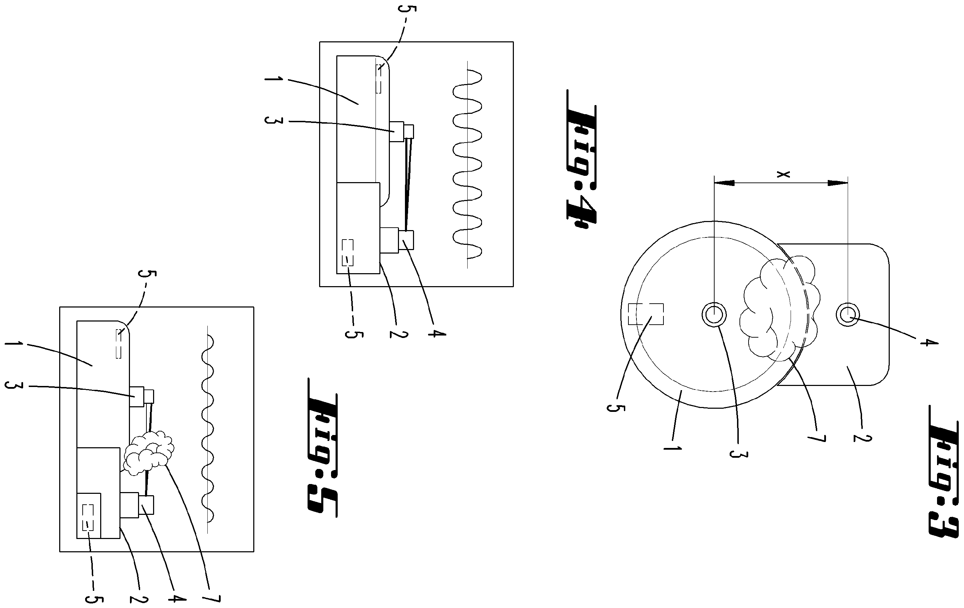

Figur 3 zeigt das System aus Flächenbearbeitungsgerät 1 und Basisstation 2 in einer Draufsicht. Zu erkennen ist die formkorrespondierende Ausbildung eines Gehäuseteilbereiches des Flächenbearbeitungsgerätes 1 und eines Gehäuseteilbereiches der Basisstation 2.

Im Folgenden werden nun drei verschiedene Ausführungsvarianten für das System aus Flächenbearbeitungsgerät 1 und Basisstation 2 vorgestellt.

Die Figuren 4 und 5 zeigen eine erste Ausführungsform der Erfindung, bei welcher das Flächenbearbeitungsgerät 1 zwei optische Geräteelemente 3 aufweist, nämlich eine Lichtquelle und einen optischen Sensor. Die Basisstation 2 weist ein optisches Geräteelement 4 auf, welches hier ein optischer Spiegel ist. Die Funktionsweise gemäß dieser Ausführungsvariante ist so, dass die Lichtquelle des Flächenbearbeitungsgerätes 1 kontinuierlich ein Lichtsignal emittiert, welches auf den Spiegel der Basisstation 2 gerichtet ist. Das Licht wird von dem Spiegel zurückreflektiert und trifft auf den Sensor des Flächenbearbeitungsgerätes 1. Die Signalamplitude des von dem Sensor empfangenen Signals ist schematisch in der Figur dargestellt. Die Figur 5 zeigt das System der Figur 4 in einer Situation, in welcher Rauch 7 in dem optischen Strahlweg zwischen den optischen Geräteelementen 3 des Flächenbearbeitungsgerätes 1 und dem optischen Basiselement 4 der Basisstation 2 vorhanden ist. In dieser Situation wird das von der Lichtquelle des Flächenbearbeitungsgerätes 1 emittierte Licht zumindest teilweise von dem Rauch 7 gestreut, so dass der entsprechende Lichtanteil nicht mehr zu dem optischen Basiselement 4 der Basisstation 2 gelangen kann. Daher wird verglichen mit der Situation, in welcher kein Rauch 7 vorhanden ist, ein Lichtanteil mit einer geringeren Signalamplitude von dem Spiegel reflektiert. Zusätzlich trifft auch dieser reflektierte Lichtanteil wiederum auf den Rauch 7 und wird ein zweites Mal gestreut, so dass die von dem Sensor des Flächenbearbeitungsgerätes 1 gemessene Signalamplitude insgesamt geringer ist als die in der Situation gemäß Figur 4 gemessene Signalamplitude. Während des Messverfahrens übermittelt der Sensor des Flächenbearbeitungsgerätes 1 kontinuierlich eine Information über die Signalamplitude an die Auswerteeinrichtung 5 des Flächenbearbeitungsgerätes 1. Die Auswerteeinrichtung 5 vergleicht diese Signalamplitude mit einer Referenzsignalamplitude, welche im Wesentlichen der Signalamplitude des von der Lichtquelle emittierten Lichtsignals entspricht. Sofern die aktuell von dem Sensor gemessene Signalamplitude die Referenzsignalamplitude um einen bestimmten Prozentsatz unterschreitet (Grenzwert), wird auf die Anwesenheit von Rauch 7 geschlossen. Der definierte Grenzwert kann beispielsweise um 10 Prozent geringer sein als die Referenzsignalamplitude, welche bei Abwesenheit von Rauch 7 messbar ist. Bei Unterschreiten dieses definierten Grenzwertes sendet die Auswerteeinrichtung 5 eine Information an die Alarmanlage 6, welche daraufhin ein Alarmsignal emittiert. Dieses Alarmsignal kann ein optisches und/oder akustisches Signal sein. Vorteilhaft kann auch eine Notrufstelle über den Brand informiert werden.

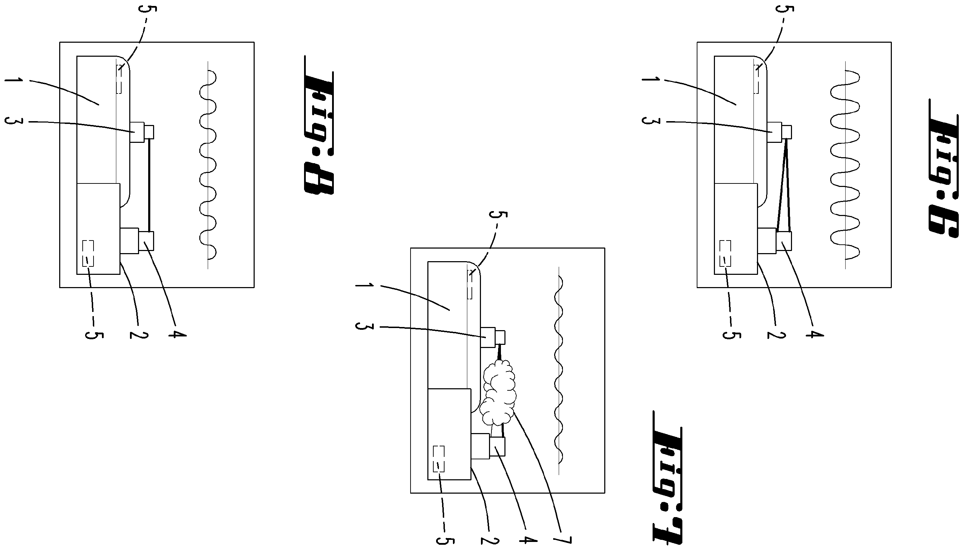

Die Figuren 6 und 7 zeigen eine zweite Ausführungsform der Erfindung, bei welcher das Flächenbearbeitungsgerät 1 nur ein einziges optisches Geräteelement 3 aufweist, und bei welcher die Basisstation 2 zwei optische Basiselemente 4 aufweist. Die zwei optischen Basiselemente 4 sind eine Lichtquelle und ein Lichtsensor. Das optische Geräteelement 3 ist ein dem Flächenbearbeitungsgerät 1 zugeordneter Spiegel. Im Übrigen funktioniert die Erfindung gemäß dieser zweiten Ausführungsform analog zu der Ausführungsform gemäß den Figuren 4 und 5.

Auch wenn dies nicht explizit als eine weitere Ausführungsform dargestellt ist, versteht es sich von selbst, dass analog zu den in den Figuren 4 bis 7 gezeigten Ausführungsformen auch ein externes Element wie beispielsweise ein reflektierender Oberflächenteilbereich einer Wand, eines Möbelstücks oder ähnliches als Spiegel bzw. spiegelnde Fläche eingesetzt werden kann. Die optischen Geräteelemente 3 des Flächenbearbeitungsgerätes 1 bzw. die optischen Basiselemente 4 der Basisstation 2 können dann mit diesem Oberflächenteilbereich zusammenwirken, so dass das Flächenbearbeitungsgerät 1 gemäß den Figuren 4 und 5 auch ohne Basisstation 2 als Rauchsensor arbeiten kann bzw. die Basisstation 2 gemäß den Figuren 6 und 7 auch ohne Flächenbearbeitungsgerät 1 als Rauchsensor arbeiten kann.

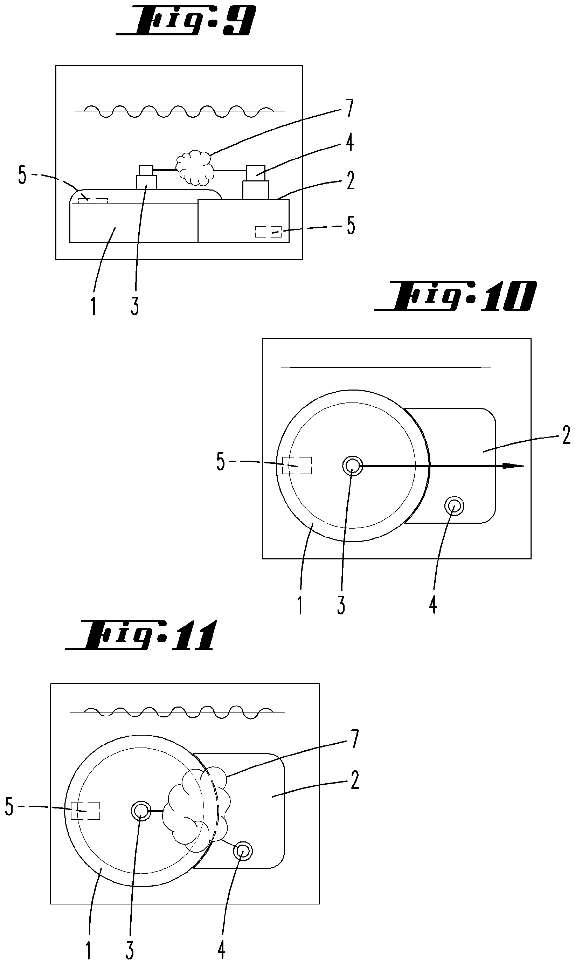

Die Figuren 8 und 9 zeigen eine dritte Ausführungsform der Erfindung, bei welcher das Flächenbearbeitungsgerät 1 ein optisches Geräteelement 3, nämlich eine Lichtquelle, aufweist, und die Basisstation 2 ein optisches Basiselement 4, nämlich einen Sensor, aufweist. Das von der Lichtquelle des Flächenbearbeitungsgerätes 1 emittierte Licht wird somit von dem Sensor der Basisstation 2 detektiert. Ohne die Anwesenheit von Rauch 7 zwischen der Lichtquelle und dem Sensor weist das Messsignal des Sensors die in der Figur 8 dargestellte Signalamplitude auf. Figur 9 zeigt die Situation bei Anwesenheit von Rauch 7 zwischen der Lichtquelle und dem Sensor. Dabei wird das von der Lichtquelle emittierte Licht an dem Rauch 7 gestreut und kann nur noch zu einem geringen Anteil zu dem Sensor der Basisstation 2 gelangen. Die Signalamplitude des Messsignals ist somit geringer als die Referenzsignalamplitude ohne Anwesenheit von Rauch 7. Die verringerte Signalamplitude ist in Figur 9 dargestellt. Die dem Sensor zugeordnete Auswerteeinrichtung 5 der Basisstation 2 vergleicht die aktuelle Signalamplitude mit der gespeicherten Referenzsignalamplitude und kann bei Unterschreiten eines definierten Grenzwertes auf die Anwesenheit von Rauch 7 schließen. Im Übrigen wird ebenfalls ein Alarmsignal veranlasst.

Die Figuren 10 und 11 zeigen schließlich eine vierte Ausführungsform der Erfindung, bei welcher die Basisstation 2 nur ein optisches Basiselement 4, nämlich einen Sensor, aufweist, welches aufgrund seiner Position nur im Falle einer Anwesenheit von Rauch 7 zwischen der Lichtquelle des Flächenbearbeitungsgerätes 1 und dem Sensor ein Signal detektieren kann. Gemäß dieser Ausführungsform ist der Sensor außerhalb der optischen Achse des von der Lichtquelle emittierten Lichtes angeordnet, so dass dieser ohne Anwesenheit von Rauch 7 keinen Lichtanteil empfangen kann (Figur 10) und im Falle einer Anwesenheit von Rauch 7 einen gestreuten Lichtanteil empfängt, dessen Signalamplitude ungleich Null ist (Figur 11). Selbstverständlich wird dabei nicht nur Licht in Richtung des Sensors gestreut, sondern vielmehr diffus abgestrahlt. Die Funktionsweise beruht hier darauf, dass der Sensor aufgrund seiner Position außerhalb der optischen Achse nur dann Licht der Lichtquelle empfangen kann, wenn dieses ausgehend von der Lichtquelle an Rauch gestreut wird und somit in Richtung des Sensors gelangt. Üblicherweise, d. h. ohne Anwesenheit von Rauch 7, ist die Signalamplitude des Messsignals somit Null, während die Signalamplitude bei der Anwesenheit von Rauch 7 einen Wert ungleich Null aufweist, der bei Überschreiten eines definierten Grenzwertes als Anwesenheit von Rauch 7 erkannt wird. Die Alarmveranlassung erfolgt dann wie zuvor erläutert.

### Liste der Bezugszeichen

- 1: Flächenbearbeitungsgerät
- 2: Basisstation
- 3: optisches Geräteelement
- 4: optisches Basiselement
- 5: Auswerteeinrichtung
- 6: Alarmanlage
- 7: Rauch

- x: Abstand

## Patentansprüche

1. Basisstation (2) zur Verbindung mit einem Flächenbearbeitungsgerät (1) für eine Servicehandlung, insbesondere Reinigung des Flächenbearbeitungsgerätes (1) und/oder Ladung eines Akkumulators des Flächenbearbeitungsgerätes (1), wobei die Basisstation (2) mindestens ein optisches Basiselement (4) und eine Auswerteeinrichtung (5) aufweist, **dadurch gekennzeichnet, dass** das optische Basiselement (4) zur Zusammenwirkung mit einem externen Element derart ausgebildet ist, dass von dem optischen Basiselement (4) emittiertes Licht mittels des externen Elementes zumindest teilweise zu dem optischen Basiselement (4) reflektiert wird, wobei die Auswerteeinrichtung (5) ausgebildet ist, während einer Zusammenwirkung des optischen Basiselementes (4) und des externen Elementes zum Zwecke der Detektion einer Anwesenheit von Rauch (7) zwischen dem optischen Basiselement (4) und dem externen Element ein von dem optischen Basiselement (4) empfangenes Messsignal in Bezug auf eine zeitliche Änderung der Signalamplitude auszuwerten und bei Passieren eines definierten Grenzwertes ein Alarmsignal zu veranlassen.

2. Basisstation (2) nach Anspruch 1, **dadurch gekennzeichnet, dass** mehrere optische Basiselemente vorgesehen sind.

3. Basisstation (2) nach Anspruch 1 oder 2, **dadurch gekennzeichnet, dass** das optische Basiselement (4) eine Diode, besonders bevorzugt eine Laserdiode, aufweist.

4. Basisstation nach einem der vorherigen Ansprüche, **dadurch gekennzeichnet, dass** das optische Basiselement (4) ein Sensor, insbesondere eine Fotodiode oder ein Kamerachip, ist.

5. System aus einem Flächenbearbeitungsgerät (1), insbesondere Reinigungsroboter, und einer Basisstation (2) zur Verbindung mit dem Flächenbearbeitungsgerät (1) für eine Servicehandlung, insbesondere Reinigung des Flächenbearbeitungsgerätes (1) und/oder Ladung eines Akkumulators des Flächenbearbeitungsgerätes (1), wobei das Flächenbearbeitungsgerät (1) mindestens ein optisches Geräteelement (3) aufweist, und wobei die Basisstation (2) mindestens ein zur Zusammenwirkung mit dem optischen Geräteelement (3) und zur Emission von Licht ausgebildetes optisches Basiselement (4) aufweist, **dadurch gekennzeichnet, dass** zumindest einem optischen Element (3, 4) eine Auswerteeinrichtung (5) zugeordnet ist, welche ausgebildet ist, während einer Zusammenwirkung der optischen Elemente (3, 4) zum Zwecke der Detektion einer Anwesenheit von Rauch (7) zwischen dem optischen Geräteelement (3) und dem optischen Basiselement (4) ein von einem der optischen Elemente (3, 4) empfangenes Messsignal in Bezug auf eine zeitliche Änderung der Signalamplitude auszuwerten und bei Passieren eines definierten Grenzwertes ein Alarmsignal zu veranlassen und dass die Zusammenwirkung der optischen Elemente (3, 4) bei einem Kontakt zwischen dem Flächenbearbeitungsgerät (1) und der Basisstation (2) stattfindet, wobei gleichzeitig zu der Funktion als Rauchsensor auch Servicehandlungen der Basisstation (2) durchgeführt werden können, wie beispielsweise die Ladung eines Akkumulators oder die Reinigung einer Staubkammer des Flächenbearbeitungsgerätes (1).

6. System nach Anspruch 5, **dadurch gekennzeichnet, dass** die optischen Elemente (3, 4) so an dem Flächenbearbeitungsgerät (1) und der Basisstation (2) angeordnet sind, dass ein Abstand (x) zwischen dem optischen Geräteelement (3) und dem optischen Basiselement (4) während einer Zusammenwirkung ungefähr 1 cm bis 20 cm beträgt.

7. System nach einem der Ansprüche 5 oder 6, **dadurch gekennzeichnet, dass** das optische Geräteelement (3) oder das optische Basiselement (4) eine Lichtquelle ist, bevorzugt eine Diode, besonders bevorzugt eine Laserdiode.

8. System nach einem der Ansprüche 5 bis 7, **dadurch gekennzeichnet, dass** das optische Basiselement (4) oder das optische Geräteelement (3) ein Sensor, insbesondere eine Fotodiode oder ein Kamerachip, ist.

9. System nach einem der Ansprüche 5 bis 8, **dadurch gekennzeichnet, dass** das optische Basiselement (4) oder das optische Geräteelement (3) ein Spiegel zur zumindest teilweisen Reflexion des von dem optischen Geräteelement oder dem optischen Basiselement emittierten Lichtes ist.

10. Verfahren zum Betrieb einer in einem der vorhergehenden Ansprüche 1 bis 4 beschriebenen Basisstation (2), wobei mindestens ein optisches Basiselement (4) der Basisstation (2) mit einem externen Element zusammenwirkt, **dadurch gekennzeichnet, dass** das optische Basiselement (4) für eine Zusammenwirkung mit dem Abstand (x) beabstandet wird, wobei das optische Basiselement (4)Licht emittiert, welches von dem optischen Basiselement (4) empfangen wird, wobei eine Auswerteeinrichtung (5) der Basisstation (2) das mittels des optischen Basiselementes (4) empfangene Messsignal zum Zwecke der Detektion einer Anwesenheit von Rauch (7) zwischen dem optischen Basiselement (4) und dem externen Element in Bezug auf eine zeitliche Änderung der Signalamplitude auswertet und bei einem Passieren eines definierten Grenzwertes ein Alarmsignal veranlasst.

## Claims

1. Base station (2) for connection to a surface treatment device (1) for a service process, in particular cleaning of the surface treatment device (1) and/or charging of a battery of the surface treatment device (1), the base station (2) comprising at least one optical base element (4) and an evaluation apparatus (5), **characterised in that** the optical base element (4) is designed for an interaction with an external element such that light emitted by the optical base element (4) is at least partially reflected to the optical base element (4) by means of the external element, the evaluation apparatus (5) being designed to evaluate a measurement signal received by the optical base element (4) for a temporal change in the signal amplitude in order to detect a presence of smoke (7) between the optical base element (4) and the external element during an interaction between the optical base element (4) and the external element and to trigger an alarm signal when a defined limit value is passed.

2. Base station (2) according to claim 1, **characterised in that** a plurality of optical base elements is provided.

3. Base station (2) according to either claim 1 or claim 2, **characterised in that** the optical base element (4) comprises a diode, particularly preferably a laser diode.

4. Base station according to any of the preceding claims, **characterised in that** the optical base element (4) is a sensor, in particular a photodiode or a camera chip.

5. System consisting of a surface treatment device (1), in particular a cleaning robot, and a base station (2) for connection to the surface treatment device (1) for a service process, in particular cleaning of the surface treatment device (1) and/or charging of a battery of the surface treatment device (1), the surface treatment device (1) comprising at least one optical device element (3), and the base station (2) comprising at least one optical base element (4) designed for an interaction with the optical device element (3) and to emit light, **characterised in that** at least one optical element (3, 4) is associated with an evaluation apparatus (5) that is designed to evaluate a measurement signal received by one of the optical elements (3, 4) for a temporal change in the signal amplitude in order to detect a presence of smoke (7) between the optical device element (3) and the optical base element (4) during an interaction between the optical elements (3, 4) and to trigger an alarm signal when a defined limit value is passed, and **in that** the interaction between the optical elements (3, 4) takes place when there is contact between the surface treatment device (1) and the base station (2), it being possible for service processes of the base station (2), such as the charging of a battery or the cleaning of a dust chamber of the surface treatment device (1), to be carried out at the same time as the smoke sensor function.

6. System according to claim 5, **characterised in that** the optical elements (3, 4) are arranged on the surface treatment device (1) and the base station (2) in such a way that a spacing (x) between the optical device element (3) and the optical base element (4) during an interaction is approximately 1 cm to 20 cm.

7. System according to either claim 5 or claim 6, **characterised in that** the optical device element (3) or the optical base element (4) is a light source, preferably a diode, particularly preferably a laser diode.

8. System according to any of claims 5 to 7, **characterised in that** the optical base element (4) or the optical device element (3) is a sensor, in particular a photodiode or a camera chip.

9. System according to any of claims 5 to 8, **characterised in that** the optical base element (4) or the optical device element (3) is a mirror for reflecting, at least in part, the light emitted by the optical device element or the optical base element.

10. Method for operating a base station (2) described in any of the preceding claims 1 to 4, at least one optical base element (4) of the base station (2) interacting with an external element, **characterised in that** the optical base element (4) is spaced having the spacing (x) for the purpose of an interaction, the optical base element (4) emitting light that is received by the optical base element (4), an evaluation apparatus (5) of the base station (2) evaluating the measurement signal received by the optical base element (4) for a temporal change in the signal amplitude in order to detect a presence of smoke (7) between the optical base element (4) and the external element and triggering an alarm signal when a defined limit value is passed.

## Revendications

1. Station de base (2) destinée à être reliée à un appareil de traitement de surface (1) pour une opération de service, en particulier le nettoyage de l'appareil de traitement de surface (1) et/ou la charge d'une batterie de l'appareil de traitement de surface (1), dans laquelle la station de base (2) comporte au moins un élément optique de base (4) et un dispositif d'évaluation (5), **caractérisée en ce que** l'élément optique de base (4) est agencé pour coopérer avec un élément externe de manière que la lumière émise par l'élément optique de base (4) soit réfléchie au moins partiellement vers l'élément optique de base (4) par l'élément extérieur, dans laquelle le dispositif d'évaluation (5) est conçu, aux fins de détection d'une présence de fumée (7) entre l'élément optique de base (4) et l'élément extérieur lors d'une coopération de l'élément optique de base (4) et de l'élément extérieur, pour évaluer un signal de mesure reçu par l'élément optique de base (4) par rapport à une variation temporelle de l'amplitude du signal et pour déclencher un signal d'alarme lorsqu'une valeur limite définie est dépassée.

2. Station de base (2) selon la revendication 1, **caractérisée en ce que** sont prévus plusieurs éléments optiques de base.

3. Station de base (2) selon la revendication 1 ou 2, **caractérisée en ce que** l'élément optique de base (4) comporte une diode, de préférence une diode laser.

4. Station de base selon l'une des revendications précédentes, **caractérisée en ce que** l'élément optique de base (4) est un capteur, en particulier une photodiode ou une puce de caméra ou d'appareil photo.

5. Système comprenant un appareil de traitement de surface (1), en particulier un robot de nettoyage, et une station de base (2) destinée à être reliée à l'appareil de traitement de surface (1) pour une opération de service, en particulier le nettoyage de l'appareil de traitement de surface (1) et/ou la charge d'une batterie de l'appareil de traitement de surface (1), dans lequel l'appareil de traitement de surface (1) comporte au moins un élément optique d'appareil (3) et la station de base (2) comporte au moins un élément optique de base (4) qui est conçu pour coopérer avec l'élément optique d'appareil (3) et pour émettre de la lumière, **caractérisé en ce qu'**est associé à au moins un élément optique (3, 4) un dispositif d'évaluation (5) qui est conçu, aux fins de détection d'une présence de fumée (7) entre l'élément optique d'appareil (3) et l'élément optique de base (4) lors d'une coopération des éléments optiques (3, 4), pour évaluer un signal de mesure reçu par l'un des éléments optiques (3, 4) par rapport à une variation temporelle de l'amplitude du signal et pour déclencher un signal d'alarme lorsqu'une valeur limite définie est dépassée, et en que la coopération entre les éléments optiques (3, 4) se produise lors d'un contact entre l'appareil de traitement de surface (1) et la station de base (2), dans lequel peuvent être exécutées, simultanément à la fonction de détecteur de fumée, des opérations de service de la station de base (2) telles que la charge d'une batterie ou le nettoyage d'une chambre à poussière de l'appareil de traitement de surface (1).

6. Système selon la revendication 5, **caractérisé en ce que** les éléments optiques (3, 4) sont agencés sur l'appareil de traitement de surface (1) et la station de base (2) de manière qu'une distance (x) entre l'élément optique d'appareil (3) et l'élément optique de base (4) pendant une coopération soit approximativement de 1 cm à 20 cm.

7. Système selon l'une des revendications 5 ou 6, **caractérisé en ce que** l'élément optique d'appareil (3) ou l'élément optique de base (4) est une source lumineuse, de préférence une diode, et de manière particulièrement préférée une diode laser.

8. Système selon l'une des revendications 5 à 7, **caractérisé en ce que** l'élément optique de base (4) ou l'élément optique d'appareil (3) est un capteur, en particulier une photodiode ou une puce de caméra ou d'appareil photo.

9. Système selon l'une quelconque des revendications 5 à 8, **caractérisé en ce que** l'élément optique de base (4) ou l'élément optique d'appareil (3) est un miroir pour réfléchir au moins partiellement la lumière émise par l'élément optique d'appareil ou l'élément optique de base.

10. Procédé pour faire fonctionner une station de base (2) décrite dans l'une des revendications précédentes 1 à 4, dans lequel au moins un élément optique de base (4) de la station de base (2) coopère avec un élément extérieur, **caractérisé en ce que** l'élément optique de base (4) est espacé de l'espacement (x) pour une coopération, dans lequel l'élément optique de base (4) émet de la lumière qui est reçue par l'élément optique de base (4), dans lequel un dispositif d'évaluation (5) de la station de base (2), aux fins de détection d'une présence de fumée (7) entre l'élément optique de base (4) et l'élément extérieur, évalue le signal de mesure reçu au moyen de l'élément optique de base (4) par rapport à une variation temporelle de l'amplitude du signal et déclenche un signal d'alarme quand une valeur limite définie est dépassée.
